# EUROPÄISCHE PATENTANMELDUNG

(11) **EP 4 810 360 A1**
(43) Veröffentlichungstag der Anmeldung: **23.09.2026**
(21) Anmeldenummer: 26163137.8
(22) Anmeldetag: 09.03.2026
(51) Int. Cl.: B62H 5/00, B62J 11/00

(54) **HALTERUNG**

(30) Priorität: 18.03.2025 DE 102025110415
(71) Anmelder: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB

(57) **Zusammenfassung**

Eine Halterung für ein Zweiradzubehör, insbesondere für ein Zweiradschloss, umfasst einen Grundkörper, durch den eine Anlagefläche definiert wird, die bezüglich einer Querrichtung durch zwei entgegengesetzte Längsseiten begrenzt wird und an der das Zweiradzubehör anliegt, wenn es in der Halterung aufgenommen ist, sowie eine oder mehrere Schwenkklammern, die jeweils zwischen einem Freigabezustand und einem Sicherungszustand verstellbar sind, um im Freigabezustand ein Aufnehmen des Zweiradzubehörs in die Halterung oder ein Entnehmen des Zweiradzubehörs aus der Halterung zu ermöglichen und im Sicherungszustand das Zweiradzubehör, wenn es in der Halterung aufgenommen ist, gegen ein Entnehmen aus der Halterung zu sperren. Dabei sind die Schwenkklammern jeweils zumindest zweiteilig ausgebildet und umfassen einen ersten Schwenkarm, der um eine erste Schwenkachse schwenkbar an dem Grundkörper gelagert ist und im Freigabezustand eine Ausschwenkstellung sowie im Sicherungszustand eine Einschwenkstellung einnimmt, sowie einen zweiten Schwenkarm, der um eine zweite Schwenkachse schwenkbar an dem Grundkörper gelagert ist und im Freigabezustand eine Ausschwenkstellung sowie im Sicherungszustand eine Einschwenkstellung einnimmt, wobei die erste Schwenkachse und die zweite Schwenkachse näher an derselben der beiden Längsseiten der Anlagefläche angeordnet sind als an der anderen.

## Beschreibung

Die Erfindung betrifft eine Halterung für ein Zweiradzubehör, insbesondere für ein Zweiradschloss, vorzugsweise für ein Gelenkstabschloss.

Aufgrund des an einem Zweirad üblicherweise vergleichsweise eingeschränkten Stauraums ist es vorteilhaft, für manches Zubehör eine gesonderte Halterung vorzusehen. Insbesondere Schlösser zum Sichern des Zweirads im abgestellten Zustand müssen in der Regel stets mitgeführt werden. Sofern es sich dabei nicht um ein an dem Zweirad fest montiertes Schloss, etwa ein Rahmenschloss, handelt, kann daher für ein Schloss, oder aber auch für ein anderes lose mitgeführtes Zubehör, eine Halterung an dem Zweirad vorgesehen werden.

Wichtigste Aufgabe der Halterung ist dabei ein zuverlässiges Halten des darin aufgenommenen Zubehörs, damit es, insbesondere während der Fahrt, nicht verloren gehen kann und vor allem nicht die Sicherheit des Fahrers gefährdet (z. B. wenn es aus der Halterung fallend in die Speichen eines Rades geriete). Dabei ist es aber wünschenswert, wenn sowohl das Einsetzen des Zubehörs in die Halterung als auch das Entnehmen des Zubehörs aus der Halterung in besonders einfacher Weise möglich ist. Die Halterung sollte zudem möglichst kompakt sein, um an dem Zweirad ohne Beeinträchtigung des Fahrenden angebracht werden zu können.

Es ist bekannt, Zweiradschlösser dadurch an einem Zweirad zu befestigen, dass sie direkt an einer Halterung angeschlossen werden, also nur durch Aufschließen mittels des jeweiligen Schlüssels von der Halterung gelöst werden können. Die Halterung kann dazu beispielsweise einfach eine Öse bereitstellen, durch die das Schloss geführt und anschließend verschlossen wird. Während diese Art der Anordnung besonders zuverlässig gegen ein versehentliches Lösen gesichert ist, ist sie insbesondere für Gelenkstabschlösser (die auch als Faltschlösser bezeichnet werden) nicht geeignet. Denn anders als etwa bei einem Spiralschloss könnten bei einem Gelenkstabschloss die Gelenkstäbe des Gelenkstabschlosses, wenn sie nicht in irgendeiner Weise in zusammengelegtem Zustand gehalten werden, unkontrolliert ausklappen, was beim Fahren eine Gefahr darstellen könnte. Zudem ist ein solches Anschließen des Schlosses an das Zweirad insofern unkomfortabel, als das Schloss für seine Lagerung an dem Zweirad jeweils verschlossen und vor einer Nutzung wieder aufgeschlossen werden muss. Die Bedienung der Halterung ist aber umso komfortabler, je flüssiger der Bewegungsablauf beim Einsetzen und Entnehmen des Schlosses in die Halterung bzw. aus der Halterung sein kann.

Insofern ist es vorzuziehen, wenn das zu haltende Zubehör für seine Lagerung an dem Zweirad nicht eigens abgeschlossen oder geöffnet werden muss. Noch vorteilhafter ist es ferner, wenn auch die Halterung selbst nicht eigens abgeschlossen bzw. aufgeschlossen werden muss, sondern eher automatisch oder zumindest möglichst selbsttätig, insbesondere einen Nutzer der Halterung unterstützend, zwischen einem Zustand, der ein Einsetzen des Zubehörs in die Halterung bzw. ein Entnehmen des Zubehörs aus der Halterung ermöglicht, und einem Zustand, in dem das in der Halterung aufgenommene Zubehör gegen ein Entnehmen aus der Halterung gesperrt ist, verstellbar ist.

Es sind Halterungen für Zweiradzubehör, wie etwa ein Zweiradschloss, insbesondere für ein Gelenkstabschloss, bekannt, die diese Anforderungen erfüllen. Derartige Halterungen, die nach dem Oberbegriff des Anspruchs 1 ausgebildet sind, werden in DE 10 2016 104 798 A1 beschrieben und haben sich als zuverlässig erwiesen.

Allerdings sind diese Halterungen nur für Zweiradzubehör einer begrenzten Breite geeignet. Beispielsweise eignen sich Halterungen, die gemäß der in den Figuren von DE 10 2016 104 798 A1 gezeigten Ausführungsform ausgebildet sind, für Gelenkstabschlösser, deren Breite sich im Wesentlichen daraus ergibt, dass sie sechs Gelenkstäbe umfassen, jedoch nicht für entsprechende Gelenkstabschlösser, die mehr Gelenkstäbe umfassen und daher breiter sind. Der Grund dafür ergibt sich aus dem Aufbau der genannten Halterungen. Diese weisen neben einem Grundkörper, durch den eine Anlagefläche definiert wird, an der das Zweiradzubehör anliegt, wenn es in der Halterung aufgenommen ist, zwei Schwenkklammern auf, die jeweils einen Halteschenkel sowie einen Hebelschenkel umfassen und zwischen einer Freigabestellung und einer Sicherungsstellung verschwenkbar sind; in der Sicherungsstellung erstreckt sich dabei jeweils ein Tangentialabschnitt des Halteschenkels über die Anlagefläche und sperrt dadurch das in der Halterung aufgenommene Gelenkstabschloss dagegen, aus der Halterung entnommen zu werden, wohingegen die Schwenkklammern in der Freigabestellung so weit voneinander weg verschwenkt sind, dass die Tangentialabschnitte den Bereich über der Anlagefläche verlassen und dann einen Abstand zueinander aufweisen, der größer als die Breite des Gelenkstabschlosses ist, so dass das Gelenkstabschloss zwischen den Tangentialabschnitten hindurch aus der Halterung entnommen werden kann. Für eine zuverlässige Sicherung breiterer Gelenkstabschlösser müssten die genannten Tangentialabschnitte länger ausgebildet sein, um sich über möglichst viele Gelenkstäbe zu erstrecken, so dass ausgeschlossen ist, dass die mittleren Gelenkstäbe des Gelenkstabschlosses zwischen den Tangentialabschnitten hindurch die Halterung verlassen können; dann aber müssten die Schwenkklammern auch weiter voneinander weg verschwenkt werden können, damit der Abstand zwischen den Tangentialabschnitten so groß werden kann, dass das Gelenkstabschloss in der Freigabestellung für ein Entnehmen aus der Halterung freigegeben ist. Das ist jedoch nicht ohne Weiteres möglich, da die Schwenkbarkeit der Schwenkklammern durch den engen Spielraum begrenzt ist, der den Hebelschenkeln unterhalb der Anlagefläche für ein Verschwenken zu Verfügung steht.

Allgemein besteht für Halterungen nach dem Oberbegriff des Anspruchs 1 das Problem, dass, wenn sie für vergleichsweise breites Zweiradzubehör geeignet sein sollen, ihre Schwenkklammern das Zweiradzubehör entsprechend weit umgreifen können müssen und infolgedessen eine entsprechend große Schwenkbarkeit aufweisen müssen, die aber aufgrund eines idealerweise kompakten Aufbaus der Halterung, insbesondere ihres Grundkörpers, beschränkt ist.

Es ist eine Aufgabe der Erfindung, eine Halterung für ein Zweiradzubehör, beispielsweise für ein Zweiradschloss, insbesondere für ein Gelenkstabschloss, der genannten Art bereitzustellen, die zuverlässig, kompakt ausgebildet und dennoch auch für vergleichsweise breites Zweiradzubehör geeignet ist.

Die Aufgabe wird gelöst durch eine Halterung mit den Merkmalen des Anspruchs 1. Vorteilhafte Ausführungsformen ergeben sich aus den Unteransprüchen, den Figuren sowie der vorliegenden Beschreibung.

Die Halterung ist als Halterung für ein Zweiradzubehör, insbesondere für ein Zweiradschloss, vorzugsweise für ein Gelenkstabschloss, ausgebildet und umfasst einen Grundkörper, durch den eine Anlagefläche definiert wird, die bezüglich einer Querrichtung durch zwei entgegengesetzte Längsseiten begrenzt wird und an der das Zweiradzubehör anliegt, wenn es in der Halterung aufgenommen ist, sowie eine oder mehrere Schwenkklammern, die jeweils an einer der beiden Längsseiten (23) angeordnet sind und zwischen einem Freigabezustand und einem Sicherungszustand verstellbar sind, um im Freigabezustand ein Aufnehmen des Zweiradzubehörs in die Halterung oder ein Entnehmen des Zweiradzubehörs aus der Halterung zu ermöglichen und im Sicherungszustand das Zweiradzubehör, wenn es in der Halterung aufgenommen ist, gegen ein Entnehmen aus der Halterung zu sperren.

Insbesondere stellt der Grundkörper somit einen statischen Teil der Halterung dar, während die Schwenkklammern (relativ zu dem Grundkörper) beweglich sind. Somit kann die Halterung dazu ausgebildet sein, mit dem Grundkörper an dem Zweirad, insbesondere einem Rahmen des Zweirades befestigt zu werden. Außerdem wird durch den Grundkörper die genannte Anlagefläche zum Anlegen des Zweiradzubehörs definiert, so dass das Zubehör über den Grundkörper stabil und insbesondere in definierter Lage an dem Zweirad angeordnet werden kann.

Die Anlagefläche kann dabei als eine Oberfläche an dem Grundkörper ausgebildet sein. Sie kann aber auch lediglich insofern durch den Grundkörper definiert sein, als dieser eine (nicht zwangsläufig flächige und nicht zwangsläufig durchgehende) Struktur aufweist, an der das Zubehör angelegt werden kann. Eine solche Struktur kann beispielsweise lediglich Stützpunkte und/oder -kanten aufweisen, an denen das Zubehör, wenn es in der Halterung aufgenommen ist, abgestützt ist. Aus solchen Stützpunkten und/oder -kanten kann die Anlagefläche dann extrapoliert werden. Die Anlagefläche ist dabei vorzugsweise kontinuierlich und zumindest im Wesentlichen flächig, muss aber nicht exakt eben sein, sondern kann beispielsweise auch eine gewisse Krümmung, insbesondere parallel und/oder senkrecht zu einer Längsrichtung des Grundkörpers aufweisen, oder auf spezifische Weise an die Form des Zweiradzubehörs angepasst sein.

In eine Querrichtung wird die Anlagefläche durch zwei entgegengesetzte Längsseiten begrenzt. Diese Längsseiten weisen jeweils vorzugsweise einen geraden Verlauf auf. Falls die Längsseiten keinen geraden Verlauf aufweisen, lassen sie sich jeweils vorzugsweise durch eine zu einer Längsrichtung parallele Gerade annähern, wobei die Längsrichtung zu der genannten Querrichtung senkrecht ist. Die Anlagefläche kann sich entlang dieser Längsrichtung erstrecken. Darunter ist insbesondere zu verstehen, dass die für das Anlegen des Zweiradzubehörs an dem Grundkörper zur Verfügung stehende Fläche in die Längsrichtung eine größere Ausdehnung aufweist als in die genannte Querrichtung. Allerdings ist grundsätzlich auch denkbar, dass die Anlagefläche in die Querrichtung eine größere Erstreckung aufweist als in die Längsrichtung. Die Anlagefläche kann zudem zumindest im Wesentlichen symmetrisch zur Längsrichtung, d.h. zu einer zur Längsrichtung parallelen Symmetrieachse oder zu einer zur Längsrichtung parallelen und zur Anlagefläche zumindest im Wesentlichen senkrechten Symmetrieebene, ausgebildet sein. Vorzugsweise sind die Schwenkklammern derart angeordnet, dass sie jeweils (genau) eine der Längsseiten der Anlagefläche flankieren. Das kann insbesondere umfassen, dass sich die jeweilige Schwenkklammer - zumindest im Sicherungszustand - um die jeweilige Längsseite herum erstreckt.

Wenn hier oder im Folgenden von Schwenkklammern im Plural die Rede ist, so sind damit die eine oder die mehreren an der Halterung vorhandenen Schwencklammern gemeint. Folglich kann, solange die Zahl der Schwenkklammern (z.B. zwei oder mehrere) nicht ausdrücklich definiert wird, trotz der Verwendung des Plurals jeweils auch lediglich eine einzige Schwenkklammer gemeint sein.

Die Verstellbarkeit der Schwenkklammern ermöglicht (zumindest) zwei unterschiedliche definierte Zustände: Im Freigabezustand kann das Zweiradzubehör in die Halterung aufgenommen werden bzw., wenn es bereits in der Halterung aufgenommen ist, aus der Halterung entnommen werden; im Sicherungszustand sind die Schwenkklammern dagegen so eingestellt, dass das Zweiradzubehör, wenn es in der Halterung aufgenommen ist, nicht aus der Halterung entnommen werden kann, sondern von den Schwenkklammern daran gehindert wird. Im Freigabezustand und im Sicherungszustand nehmen die Schwenkklammern bzw. ihre Bestandteile jeweils eine bestimmte Stellung oder Konfiguration ein. Daher können der Freigabezustand und der Sicherungszustand auch als Freigabestellung bzw. Sicherungsstellung oder als Freigabekonfiguration bzw. Sicherungskonfiguration der Schwenkklammern oder der Halterung bezeichnet werden.

Im Sicherungszustand braucht die Halterung das jeweilige Zubehör nicht unbedingt vollständig zu umschließen. Insbesondere ist auch ein Abschließen der Halterung, also ein gesondertes Sichern der Schwenkklammern im Sicherungszustand, um sie gegen ein Verstellen in den Freigabezustand zu sperren, nicht unbedingt erforderlich. Vielmehr können die Schwenkklammern im Sicherungszustand lediglich derart relativ zu dem in der Halterung aufgenommenen Zubehör angeordnet bzw. ausgerichtet sein, dass sie einer Bewegung des Zubehörs aus der Halterung heraus, insbesondere von der Anlagefläche des Grundkörpers weg, entgegenstehen.

Erfindungsgemäß sind die Schwenkklammern jeweils zumindest zweiteilig ausgebildet und umfassen einen ersten Schwenkarm, der um eine erste Schwenkachse schwenkbar an dem Grundkörper gelagert ist und im Freigabezustand eine Ausschwenkstellung (des ersten Schwenkarms) sowie im Sicherungszustand eine Einschwenkstellung (des ersten Schwenkarms) einnimmt, sowie einen zweiten Schwenkarm, der um eine zweite Schwenkachse schwenkbar an der Grundkörper gelagert ist und im Freigabezustand eine Ausschwenkstellung (des zweiten Schwenkarms) sowie im Sicherungszustand eine Einschwenkstellung (des zweiten Schwenkarms) einnimmt, wobei die erste Schwenkachse und die zweite Schwenkachse näher an derselben der beiden Längsseiten der Anlagefläche angeordnet sind als an der anderen. Insbesondere ist die zweite Schwenkachse dabei von der ersten Schwenkachse verschieden. Aufgrund der Lagerung an dem Grundkörper sind die beiden Schwenkachsen zudem ortsfest, also bezüglich des Grundkörpers stationär. Ferner sind die Ausschwenkstellung und die Einschwenkstellung des ersten Schwenkarms voneinander verschieden; die Ausschwenkstellung und die Einschwenkstellung des zweiten Schwenkarms sind ebenfalls voneinander verschieden.

Der erste Schwenkarm ist vorzugsweise einteilig ausgebildet; ebenso ist der zweite Schwenkarm vorzugsweise einteilig ausgebildet. Insbesondere können der erste Schwenkarm und der zweite Schwenkarm dabei jeweils starr ausgebildet sein. Ferner sind der erste Schwenkarm und der zweite Schwenkarm vorzugsweise separat voneinander ausgebildet; insbesondere können sie als separate Bauteile unabhängig voneinander hergestellt sein. Die Schwenkklammern können zudem jeweils durch den ersten Schwenkarm und den zweiten Schwenkarm gebildet werden; es kann also vorgesehen sein, dass die Schwenkklammern jeweils keine weiteren von dem ersten Schwenkarm und dem zweiten Schwenkarm separaten Bauteile umfassen.

Die vom ersten Schwenkarm eingenommene Ausschwenkstellung, die auch als erste Ausschwenkstellung bezeichnet werden könnte, und die vom zweiten Schwenkarm eingenommene Ausschwenkstellung, die auch als zweite Ausschwenkstellung bezeichnet werden könnte, entsprechen einander zwar insofern, als sie jeweils im Freigabezustand eingenommen werden, können sich ansonsten aber trotz der gleichlautenden Bezeichnung voneinander unterscheiden. Ebenso entsprechen die vom ersten Schwenkarm eingenommene Einschwenkstellung, die auch als erste Einschwenkstellung bezeichnet werden könnte, und die vom zweiten Schwenkarm eingenommene Einschwenkstellung, die auch als zweite Einschwenkstellung bezeichnet werden könnte, einander zwar insofern, als sie jeweils im Sicherungszustand eingenommen werden, können sich ansonsten aber trotz der gleichlautenden Bezeichnung voneinander unterscheiden.

Anders als bei den eingangs genannten bekannten Halterungen sind die Schwenkklammern der erfindungsgemäßen Halterungen zweiteilig ausgebildet. Dadurch wird bei einem Verstellen der jeweiligen Schwenkklammer nicht die gesamte Schwenkklammer als einzelner starrer Körper um eine einzelne Schwenkachse verschwenkt, sondern es werden zwei Teile der jeweiligen Schwenkklammern, nämlich die beiden Schwenkarme, um zwei unterschiedliche Schwenkachsen verschwenkt. Das entspricht sozusagen einer Aufteilung der einzelnen Schwenkachse einer einteiligen Schwenkklammer auf zwei separate Schwenkachsen, wodurch sich die Kinematik beim Verstellen der Schwenkklammer vorteilhaft ändert.

Die erste Schwenkachse kann dabei zumindest im Wesentlichen dort angeordnet sein, wo auch die Schwenkachse einer einteiligen Schwenkklammer angeordnet wäre, so dass auch der erste Schwenkarm eine ähnliche Schwenkbarkeit aufweisen kann, wie eine einteilige Schwenkklammer sie aufweisen würde. Dadurch, dass die zweite Schwenkachse dazu versetzt angeordnet ist, kann aber der zweite Schwenkarm eine - insbesondere zu dem Zweck, vergleichsweise weit aufschwenken zu können - vorteilhaft angepasste Schwenkbarkeit aufweisen. Die zweite Schwenkachse braucht dafür allerdings nicht unbedingt weit von der ersten Schwenkachse entfernt zu sein und ist zweckmäßigerweise in der Nähe der ersten Schwenkachse angeordnet, da ja der erste Schwenkarm und der zweite Schwenkarm weiterhin gemeinsam eine einzelne, an einer jeweiligen der beiden Längsseiten der Anlagefläche angeordnete Schwenkklammer bilden. Aus diesem Grund sind die erste Schwenkachse und die zweite Schwenkachse an derselben Längsseite der Anlagefläche angeordnet, so dass sie beide dieser Längsseite näher sind als der dazu entgegengesetzten anderen Längsseite der Anlagefläche.

Vorzugsweise sind die erste Schwenkachse und die zweite Schwenkachse parallel zueinander. Dabei können die Schwenkachsen insbesondere senkrecht zu der Querrichtung ausgerichtet sein. Somit können die Schwenkachsen parallel zu der genannten Längsrichtung und insbesondere zu den Längsseiten der Anlagefläche sein.

Des Weiteren kann es zweckmäßig sein, dass die erste Schwenkachse und die zweite Schwenkachse bezüglich einer zur Anlagefläche senkrechten Richtung auf unterschiedlichen Seiten der Anlagefläche angeordnet sind. Insbesondere kann die erste Schwenkachse unterhalb einer Anlageebene angeordnet sein, in der die Anlagefläche liegt oder durch die die Anlagefläche, sofern sie uneben ist, angenähert werden kann, und die zweite Schwenkachse oberhalb dieser Anlageebene angeordnet sein. Dadurch kann für den zweiten Schwenkarm eine vergleichsweise große Schwenkbarkeit im Vergleich zu dem ersten Schwenkarm erreicht werden.

Damit die Schwenkklammern, auch wenn sie aus den voneinander separat ausgebildeten Schwenkarmen gebildet sind, als Ganzes verstellbar sein können, ist es zweckmäßig, dass die Schwenkarme für ein koordiniertes Verschwenken miteinander gekoppelt sind. Gemäß einer vorteilhaften Ausführungsform sind der erste Schwenkarm und der zweite Schwenkarm derart miteinander gekoppelt, dass bei einem Verschwenken des ersten Schwenkarms in dessen Einschwenkstellung der zweite Schwenkarm in seine Einschwenkstellung verschwenkt wird und bei einem Verschwenken des zweiten Schwenkarms in dessen Ausschwenkstellung der erste Schwenkarm in seine Ausschwenkstellung verschwenkt wird. Vorzugsweise wirken für die genannte Kopplung der erste Schwenkarm und der zweite Schwenkarm direkt miteinander zusammen; beispielsweise können sie sich gegenseitig unmittelbar beaufschlagen. Insofern handelt es sich bei der Kopplung also nicht um eine indirekte Kopplung, die über andere Elemente vermittelt wird.

Ferner ist es bevorzugt, dass keine starre Kopplung vorgesehen ist, dass also der erste Schwenkarm und der zweite Schwenkarm nicht an einem festen Punkt dauerhaft fest miteinander verbunden sind. Beispielsweise kann die Kopplung durch ein loses Ineinandergreifen bewirkt sein. Insbesondere kann vorgesehen sein, dass der erste Schwenkarm und der zweite Schwenkarm trotz der Kopplung grundsätzlich voneinander lösbar sind. Beispielsweise können der erste Schwenkarm und der zweite Schwenkarm derart ausgebildet sein, dass die Kopplung nur aufgrund der Lagerung der Schwenkarme am Grundkörper aufrechterhalten bleibt, sich aber spontan lösen würde, wenn die Schwenkarme vom Grundkörper gelöst würden.

Durch die Kopplung führt ein Einschwenken des ersten Schwenkarms automatisch auch zu einem Einschwenken des zweiten Schwenkarms und ein Ausschwenken des zweiten Schwenkarms automatisch auch zu einem Ausschwenken des zweiten Schwenkarms. Durch Betätigung des ersten Schwenkarms kann somit der Sicherungszustand herbeigeführt werden und durch Betätigung des zweiten Schwenkarms der Freigabezustand.

Wenn die jeweilige Schwenkklammer allein durch Betätigung des zweiten Schwenkarms sowohl in den Sicherungszustand als auch in den Freigabezustand verstellbar sein soll, kann die Kopplung auch weitergehend sein. Gemäß einer vorteilhaften Weiterbildung der vorstehenden Ausführungsform sind der erste Schwenkarm und der zweite Schwenkarm derart miteinander gekoppelt, dass bei einem Verschwenken des zweiten Schwenkarms in dessen Einschwenkstellung der erste Schwenkarm in seine Einschwenkstellung verschwenkt wird.

Schließlich können gemäß einer weiteren vorteilhaften Weiterbildung der vorstehenden Ausführungsform der erste Schwenkarm und der zweite Schwenkarm (alternativ oder - vorzugsweise - zusätzlich zu der vorstehenden Weiterbildung) derart miteinander gekoppelt sein, dass bei einem Verschwenken des ersten Schwenkarms in dessen Ausschwenkstellung der zweite Schwenkarm in seine Ausschwenkstellung verschwenkt wird.

Insgesamt kann also eine Art vollständiger Bewegungskopplung zwischen dem ersten Schwenkarm und dem zweiten Schwenkarm vorgesehen werden, infolge deren die beiden Schwenkarme zwangsläufig gemeinsam verschwenkt werden, unabhängig davon, welcher der beiden Schwenkarme betätigt wird. Insbesondere kann dadurch gewährleistet werden, dass, wenn einer der beiden Schwenkarme seine Einschwenkstellung oder seine Ausschwenkstellung einnimmt, auch der andere Schwenkarm seine entsprechende Stellung einnimmt. Dabei kann, insbesondere in Stellungen zwischen der Einschwenkstellung und der Ausschwenkstellung, ein gewisses Spiel möglich sein. Vorzugsweise ist das gemeinsame Verstellen der beiden Schwenkarme aufgrund der genannten Kopplung jedoch zumindest weitgehend spielfrei.

Gemäß einer weiteren vorteilhaften Ausführungsform unterscheiden sich die Einschwenkstellung und die Ausschwenkstellung des ersten Schwenkarms um einen ersten Schwenkwinkel, der kleiner als ein zweiter Schwenkwinkel ist, um den sich die Einschwenkstellung und die Ausschwenkstellung des zweiten Schwenkarms unterscheiden. Der Schwenkwinkel wird dabei jeweils nur hinsichtlich seines Betrags betrachtet. Der Schwenkwinkel, den der erste Schwenkarm bei einem Verschwenken aus seiner Einschwenkstellung in seine Ausschwenkstellung durchläuft, ist folglich jedenfalls betragsmäßig kleiner als der Schwenkwinkel, den der zweite Schwenkarm bei einem Verschwenken aus seiner Einschwenkstellung in seine Ausschwenkstellung durchläuft. Vorzugsweise ist jedoch auch die Schwenkrichtung, in die der erste Schwenkarm aus seiner Einschwenkstellung in seine Ausschwenkstellung verschwenkt wird, identisch zu der Schwenkrichtung, in die der zweite Schwenkarm aus seiner Einschwenkstellung in seine Ausschwenkstellung verschwenkt wird.

Die (zumindest) zweiteilige Ausbildung der Schwenkklammern ermöglicht es nicht nur, dass die beiden Schwenkarme einer jeweiligen Schwenkklammer um unterschiedliche Schwenkachsen schwenkbar sind, sondern dadurch auch, dass unterschiedliche Schwenkwinkel realisiert werden können, um die die Schwenkarme jeweils schwenkbar sind. Zweckmäßigerweise kann der erste Schwenkarm dabei um einen Schwenkwinkel aus seiner Einschwenkstellung in seine Ausschwenkstellung (oder umgekehrt) verschwenkt werden, der im Wesentlichen dem Schwenkwinkel entspricht, den auch eine einteilige Schwenkklammer aufweisen würde. Der zweite Schwenkarm weist aber vorteilhafterweise einen im Vergleich dazu größeren Schwenkwinkel auf, so dass er die Anlagefläche einerseits weit übergreifen kann, um auch ein vergleichsweise breites Zubehör sicher in der Halterung zu halten, und andererseits weit aufschwenken kann, um dennoch den Bereich über der Anlagefläche für ein Entnehmen des Zubehörs aus der Halterung freigeben zu können.

Dabei ist es vorteilhaft, wenn der erste Schwenkwinkel höchstens 45° beträgt. Vorzugsweise liegt der erste Schwenkwinkel in einem abgeschlossenen Intervall von 15° bis 35°, d. h. er beträgt mindestens 15° und höchstens 35°. Insbesondere kann der erste Schwenkwinkel etwa 25° betragen. Ferner ist es vorteilhaft, wenn der zweite Schwenkwinkel mehr als 45° beträgt. Vorzugsweise liegt der zweite Schwenkwinkel in einem abgeschlossenen Intervall von 50° bis 70°, d. h. er beträgt mindestens 50° und höchstens 70°. Insbesondere kann der zweite Schwenkwinkel etwa 60° betragen.

Gemäß einer weiteren vorteilhaften Ausführungsform weist der erste Schwenkarm einen Hebelschenkel und einen Kopplungsschenkel auf, die sich jeweils von einem gemeinsamen Übergangsabschnitt, an dem sie ineinander übergehen, zu einem jeweiligen Endabschnitt erstrecken, wobei die erste Schwenkachse durch den gemeinsamen Übergangsabschnitt verläuft, und wobei der Kopplungsschenkel einen Kopplungsabschnitt aufweist, über den der erste Schwenkarm mit dem zweiten Schwenkarm gekoppelt ist. Insbesondere kann der erste Schwenkarm über den Kopplungsabschnitt in einer der weiter oben beschriebenen Weisen mit dem zweiten Schwenkarm gekoppelt sein, beispielsweise zumindest derart, dass bei einem Verschwenken des ersten Schwenkarms in dessen Einschwenkstellung der zweite Schwenkarm in seine Einschwenkstellung verschwenkt wird und bei einem Verschwenken des zweiten Schwenkarms in dessen Ausschwenkstellung der erste Schwenkarm in seine Ausschwenkstellung verschwenkt wird.

Bei den genannten Schenkeln (Hebelschenkel und Kopplungsschenkel) handelt es sich um Abschnitte des ersten Schwenkarms. Insbesondere kann der erste Schwenkarm durch diese beiden Schenkel gebildet werden; der erste Schwenkarm weist dann keine Abschnitte auf, die nicht entweder Teil des Hebelschenkels oder Teil des Kopplungsschenkels sind. Der genannte gemeinsame Übergangsabschnitt, an dem der Hebelschenkel und der Kopplungsschenkel ineinander übergehen, kann dabei sowohl Teil des Hebelschenkels als auch Teil des Kopplungsschenkels sein. Ansonsten sind der Hebelschenkel und der Kopplungsschenkel vorzugsweise voneinander disjunkte Abschnitte des ersten Schwenkarms.

Die erste Schwenkklammer ist vorzugsweise starr ausgebildet, so dass der Hebelschenkel und der Kopplungsschenkel starr zueinander angeordnet und ausgerichtet sind. Als Schenkel weisen der Hebelschenkel und der Kopplungsschenkel jeweils bezüglich ihres zur ersten Schwenkachse senkrechten Querschnitts eine längliche Erstreckung auf. Insbesondere für den Hebelschenkel, gegebenenfalls auch für den Kopplungsschenkel ist der Verlauf dieser Erstreckung vom gemeinsamen Übergangsabschnitt zum jeweiligen Endabschnitt vorzugsweise zumindest im Wesentlichen gerade. Insbesondere für den Kopplungsschenkel kann der Verlauf aber auch gebogen sein, wobei er sich durch eine Gerade annähern lässt. In Bezug auf ihre jeweilige Erstreckung sind der Hebelschenkel und der Kopplungsschenkel vorzugsweise gewinkelt zueinander ausgerichtet. Der Winkel, den der Hebelschenkel und der Kopplungsschenkel dabei einschließen, beträgt vorzugsweise zumindest 90°, insbesondere kann er im abgeschlossenen Intervall von 100° bis 120° liegen.

Der erste Schwenkarm ist vorzugsweise so angeordnet, dass sich der Hebelschenkel von der durch den gemeinsamen Übergangsabschnitt verlaufenden ersten Schwenkachse aus unter die Anlagefläche erstreckt, wohingegen der Kopplungsschenkel die jeweilige Längsseite der Anlagefläche flankiert und sich also ausgehend von der ersten Schwenkachse an der jeweiligen Längsseite durch die oben bereits erwähnte Anlageebene hindurch erstreckt, in der die Anlagefläche liegt oder durch die die Anlagefläche, sofern sie uneben ist, angenähert werden kann. Das gilt vorzugsweise sowohl im Sicherungszustand als auch im Freigabezustand.

Gemäß einer bevorzugten Weiterbildung ist der Kopplungsabschnitt des ersten Schwenkarms am Endabschnitt des Kopplungsschenkels des ersten Schwenkarms angeordnet. Dadurch weist der Kopplungsabschnitt einen vergleichsweise großen Abstand zur ersten Schwenkachse auf und durchläuft folglich beim Verschwenken des ersten Schwenkarms aus der Einschwenkstellung in die Ausschwenkstellung (bzw. umgekehrt) eine vergleichsweise große Strecke. Das trägt dazu bei, dass bei einem Verschwenken des ersten Schwenkarms der über den Kopplungsabschnitt mit dem ersten Schwenkarm gekoppelte zweite Schwenkarm in stärkerem Maße als der erste Schwenkarm verschwenkt werden kann.

Die Halterung kann eine den Hebelschenkel des ersten Schwenkarms beaufschlagende Federvorrichtung umfassen, die dazu ausgebildet ist, den ersten Schwenkarm auf einer Seite einer Übergangsstellung in die Einschwenkstellung und auf der anderen Seite der Übergangsstellung in die Ausschwenkstellung vorzuspannen. Die Übergangsstellung ist dabei eine Schwenkstellung des ersten Schwenkarms, die zwischen der Einschwenkstellung und der Ausschwenkstellung liegt. Bei der Federvorrichtung kann es sich insbesondere um eine oder mehrere Druckfedern, zum Beispiel in Form von Schraubenfedern, handeln.

Wenn die Halterung zwei Schwenkklammern umfasst, ist die Federvorrichtung vorzugsweise zwischen den Hebelschenkeln der ersten Schwenkarme der zwei Schwenkklammern wirksam. Die Federvorrichtung kann dabei auch paarweise zwischen den Hebelschenkeln der ersten Schwenkarme jeweils zweier Schwencklammern der Halterung wirksam sein. Dass die Federvorrichtung zwischen zwei Hebelschenkeln wirksam ist, meint dabei insbesondere, dass die Federvorrichtung bezüglich der Beaufschlagung des jeweils einen der zwei Hebelschenkel an dem anderen der zwei Hebelschenkel abgestützt ist.

Gemäß einer weiteren vorteilhaften Ausführungsform weist der zweite Schwenkarm einen Kopplungsschenkel und einen Rückhalteschenkel auf, die sich jeweils von einem gemeinsamen Übergangsabschnitt, an dem sie ineinander übergehen, zu einem jeweiligen Endabschnitt erstrecken, wobei die zweite Schwenkachse durch den Endabschnitt des Kopplungsschenkels verläuft, und wobei der Kopplungsschenkel einen Kopplungsabschnitt aufweist, über den der zweite Schwenkarm mit dem ersten Schwenkarm gekoppelt ist. (Der Rückhalteschenkel kann zumindest funktional dem weiter oben genannten Tangentialabschnitt entsprechen.) Insbesondere kann der zweite Schwenkarm über den Kopplungsabschnitt in einer der weiter oben beschriebenen Weisen mit dem ersten Schwenkarm gekoppelt sein, beispielsweise zumindest derart, dass bei einem Verschwenken des ersten Schwenkarms in dessen Einschwenkstellung der zweite Schwenkarm in seine Einschwenkstellung verschwenkt wird und bei einem Verschwenken des zweiten Schwenkarms in dessen Ausschwenkstellung der erste Schwenkarm in seine Ausschwenkstellung verschwenkt wird.

Die Kopplung des zweiten Schwenkarms mit dem ersten Schwenkarm über den Kopplungsabschnitt des Kopplungsschenkels des zweiten Schwenkarms kann der weiter oben genannten Kopplung des ersten Schwenkarms mit dem zweiten Schwenkarm über den Kopplungsabschnitt des Kopplungsschenkels des ersten Schwenkarms entsprechen. In diesem Fall sind der erste Schwenkarm und der zweite Schwenkarm darüber miteinander gekoppelt, dass der Kopplungsabschnitt des Kopplungsschenkels des ersten Schwenkarms und der Kopplungsabschnitt des Kopplungsschenkels des zweiten Schwenkarms miteinander gekoppelt sind.

Bei den genannten Schenkeln (Kopplungsschenkel und der Rückhalteschenkel) handelt es sich um Abschnitte des zweiten Schwenkarms. Insbesondere kann der zweite Schwenkarm durch diese beiden Schenkel gebildet werden; der zweite Schwenkarm weist dann keine Abschnitte auf, die nicht entweder Teil des Kopplungsschenkels oder Teil des Rückhalteschenkels sind. Der genannte gemeinsame Übergangsabschnitt, an dem der Kopplungsschenkel und der Rückhalteschenkel ineinander übergehen, kann dabei sowohl Teil des Kopplungsschenkels als auch Teil des Rückhalteschenkels sein. Ansonsten sind der Kopplungsschenkel und der Rückhalteschenkel vorzugsweise voneinander disjunkte Abschnitte des zweiten Schwenkarms.

Die zweite Schwenkklammer ist vorzugsweise starr ausgebildet, so dass der Kopplungsschenkel und der Rückhalteschenkel starr zueinander angeordnet und ausgerichtet sind. Als Schenkel weisen der Kopplungsschenkel und der Rückhalteschenkel jeweils bezüglich ihres zur zweiten Schwenkachse senkrechten Querschnitts eine längliche Erstreckung auf. Der Verlauf dieser Erstreckung vom gemeinsamen Übergangsabschnitt zum jeweiligen Endabschnitt ist dabei jeweils vorzugsweise zumindest im Wesentlichen gerade. Grundsätzlich kann der Verlauf aber auch gebogen sein, wobei er sich dann durch eine Gerade annähern lässt. In Bezug auf ihre jeweilige Erstreckung sind der Kopplungsschenkel und der Rückhalteschenkel vorzugsweise gewinkelt zueinander ausgerichtet. Der Winkel, den der Kopplungsschenkel und der Rückhalteschenkel dabei einschließen, liegt vorzugsweise im abgeschlossenen Intervall von 85° bis 105°, insbesondere kann er etwa 90° betragen.

Der zweite Schwenkarm ist vorzugsweise so angeordnet, dass sich der Kopplungsschenkel im Sicherungszustand von der durch seinen Endabschnitt verlaufenden zweiten Schwenkachse aus in zur Anlagefläche zumindest im Wesentlichen senkrechter Richtung zum gemeinsamen Übergangsabschnitt erstreckt und sich der Rückhalteschenkel im Sicherungszustand von dem gemeinsamen Übergangsabschnitt aus in zur Anlagefläche zumindest im Wesentlichen paralleler Richtung bis über die Anlagefläche zu seinem Endabschnitt erstreckt.

Gemäß einer bevorzugten Weiterbildung ist der Kopplungsabschnitt des zweiten Schwenkarms zwischen der zweiten Schwenkachse und dem gemeinsamen Übergangsabschnitt des Kopplungsschenkels des zweiten Schwenkarms angeordnet. Infolgedessen durchläuft bei einem Verschwenken des zweiten Schwenkarms der gemeinsame Übergangsabschnitt (und mit ihm der Rückhalteschenkel) eine größere Strecke als der Kopplungsabschnitt, so dass eine über den Kopplungsabschnitt auf den zweiten Schwenkarm übertragene Schwenkbewegung des ersten Kopplungsarms vorteilhafterweise verstärkt wird.

Der Rückhalteschenkel kann im Sicherungszustand flächig am jeweiligen in die Halterung aufgenommenen Zubehör anliegen, um es in der Halterung zu sichern. Beispielsweise kann der Rückhalteschenkel im Querschnitt senkrecht zur zweiten Schwenkachse zumindest überwiegend einen geraden Verlauf konstanter Dicke aufweisen, so dass er aufgrund seiner Erstreckung entlang der zweiten Schwenkachse, insbesondere entlang der genannten Längsrichtung, im Wesentlichen als flacher Streifen konstanter Dicker ausgebildet sein kann. Für ein noch zuverlässigeres Zusammenwirken des Rückhalteschenkels mit dem Zubehör, kann es aber auch zweckmäßig sein, dass der Rückhalteschenkel strukturell an das Zubehör angepasst ist. Insbesondere kann der Rückhalteschenkel einen länglichen Stegabschnitt aufweisen, der (zumindest im Sicherungszustand) vom übrigen Rückhalteschenkel in Richtung zur Anlagefläche vorsteht, um in das Zweiradzubehör, insbesondere formschlüssig, einzugreifen. Der Stegabschnitt kann mit seiner länglichen Form insbesondere parallel zur zweiten Schwenkachse ausgerichtet sein. Der Stegabschnitt kann beispielsweise dazu vorgesehen sein, im Sicherungszustand in eine an dem Zubehör ausgebildete Kerbe einzugreifen. Wenn es sich bei dem Zweiradzubehör um ein Gelenkstabschloss handelt, kann der Stegabschnitt insbesondere dazu vorgesehen sein, im Sicherungszustand in einen kerbenartigen Bereich zwischen zwei aneinander angrenzenden Gelenkstäben des (zusammengelegten) Gelenkstabschlosses einzugreifen.

Eine vorteilhafte Weiterbildung zu Ausführungsformen, bei denen wie vorstehend beschrieben der erste Schwenkarm und der zweite Schwenkarm jeweils einen Kopplungsschenkel mit einem Kopplungsabschnitt aufweisen, beruht darauf, dass der Kopplungsabschnitt eines der beiden Schwenkarme als Kopplungsnut ausgebildet ist und der Kopplungsabschnitt des anderen der beiden Schwenkarme als Kopplungssteg ausgebildet ist, wobei der Kopplungssteg für die genannte Kopplung in die Kopplungsnut eingreift. Die genannte Kopplung des ersten Schwenkarms und des zweiten Schwenkarms miteinander kann vorzugsweise gerade, insbesondere ausschließlich, durch dieses Eingreifen bewirkt werden.

Der Kopplungssteg kann dabei insbesondere parallel zu der Schwenkachse verlaufen, um die der jeweilige Schwenkarm, an dessen Kopplungsschenkel der Kopplungssteg ausgebildet ist, schwenkbar ist. Ebenso kann die Kopplungsnut dabei insbesondere parallel zu der Schwenkachse verlaufen, um die der jeweilige Schwenkarm, an dessen Kopplungsschenkel die Kopplungsnut ausgebildet ist, schwenkbar ist. Im Querschnitt senkrecht zu dieser Schwenkachse kann der als Kopplungsnut ausgebildete Kopplungsabschnitt beispielsweise gabelförmig oder Y-förmig ausgebildet sein, wobei die Kopplungsnut durch den Zwischenraum zwischen den beiden Zinken der Gabelform bzw. Zweigen der Y-Form gebildet wird.

Durch die genannte Ausbildung der beiden Kopplungsabschnitte kann die Tiefe des Eingreifens des einen Kopplungsabschnitts in den anderen variabel sein. Insbesondere kann die Tiefe des Eingreifens von der jeweiligen Schwenkstellung der beiden Schwenkarme abhängen. Beispielsweise kann der Kopplungssteg im Freigabezustand tiefer in die Kopplungsnut eingreifen als im Sicherungszustand. Die variable Eingriffstiefe ermöglicht dabei eine durchgehende Kopplung der beiden Schwenkarme miteinander in allen Schwenkstellung trotz der unterschiedlichen stationären Schwenkachsen, um die der erste und der zweite Schwenkarm schwenkbar sind.

Gemäß einer weiteren vorteilhaften Ausführungsform weist die Halterung zumindest ein Paar aus zwei Schwenkklammern auf, die jeweils in der genannten Weise ausgebildet sind. Mit anderen Worten gilt für jede der zwei Schwenkklammern des zumindest einen Paares zumindest: dass sie an einer der beiden Längsseiten der Anlagefläche angeordnet ist und zwischen einem Freigabezustand und einem Sicherungszustand verstellbar ist, um im Freigabezustand ein Aufnehmen des Zweiradzubehörs in die Halterung oder ein Entnehmen des Zweiradzubehörs aus der Halterung zu ermöglichen und im Sicherungszustand das Zweiradzubehör, wenn es in der Halterung aufgenommen ist, gegen ein Entnehmen aus der Halterung zu sperren; und dass sie zweiteilig ausgebildet ist und einen ersten Schwenkarm umfasst, der um eine erste Schwenkachse schwenkbar an dem Grundkörper gelagert ist und im Freigabezustand eine Ausschwenkstellung sowie im Sicherungszustand eine Einschwenkstellung einnimmt, sowie einen zweiten Schwenkarm umfasst, der um eine zweite Schwenkachse schwenkbar an dem Grundkörper gelagert ist und im Freigabezustand eine Ausschwenkstellung sowie im Sicherungszustand eine Einschwenkstellung einnimmt, wobei die erste Schwenkachse und die zweite Schwenkachse näher an derselben der beiden Längsseiten der Anlagefläche angeordnet sind als an der anderen. Darüber hinaus können beide Schwenkklammern des zumindest einen Paares gemäß den Schwenkklammern der vorstehend beschriebenen Ausführungsformen ausgebildet sein. Vorzugsweise ist vorgesehen, dass die zweiten Schwenkarme der zwei Schwenkklammern des jeweiligen Paares sowohl im Freigabezustand als auch im Sicherungszustand einander nicht berühren, dass also auch im Sicherungszustand ein Abstand zwischen den zweiten Schwenkarmen, insbesondere zwischen den genannten Rückhalteschenkeln der zweiten Schwenkarme, verbleibt.

Bei der vorstehenden Ausführungsform, die zumindest ein Paar aus zwei Schwenkklammern aufweist, ist es ferner bevorzugt, dass die zwei Schwenkklammern des zumindest einen Paares bezüglich einer zur Anlagefläche zumindest im Wesentlichen senkrechten Spiegelachse oder Spiegelebene symmetrisch zueinander angeordnet sind. Bezüglich der genannten Spiegelachse können die zwei Schwenkklammern des jeweiligen Pares eine Drehsymmetrie um 180° aufweisen; bezüglich der genannten Spiegelebene können die zwei Schwenkklammern des jeweiligen Paares spiegelsymmetrisch sein. Wenn die Halterung mehrere Paare von Schwenkklammern aufweist, dann sind die Schwenkklammern vorteilhafterweise paarweise symmetrisch zueinander angeordnet. Die genannte Spiegelachse ist vorzugsweise senkrecht zu der gennannten Längsrichtung und/oder zu der genannten Querrichtung ausgerichtet; die genannte Spiegelebene ist vorzugsweise senkrecht zu der genannten Querrichtung ausgerichtet.

Infolge der genannten Symmetrie kann insbesondere vorsehen sein, dass alle vier Schwenkachsen der zwei Schwenkklammern des jeweiligen Paares (d. h. die erste Schwenkachse und die zweite Schwenkachse der einen Schwenkklammer sowie die erste Schwenkachse und die zweite Schwenkachse der anderen Schwenkklammer) parallel zueinander, vorzugsweise parallel zu der genannten Längsrichtung, sind. Allerdings unterscheiden sich die Schwenkklammern vorzugsweise hinsichtlich der Schwenkrichtungen ihrer Schwenkarme. Insbesondere kann die Schwenkrichtung, in der der erste Schwenkarm der einen Schwenkklammer aus seiner Ausschwenkstellung in seine Einschwenkstellung verschwenkt werden kann, gerade entgegengesetzt zu der Schwenkrichtung sein, in der der erste Schwenkarm der anderen Schwenkklammer aus seiner Ausschwenkstellung in seine Einschwenkstellung verschwenkt werden kann, und kann die Schwenkrichtung, in der der zweite Schwenkarm der einen Schwenkklammer aus seiner Ausschwenkstellung in seine Einschwenkstellung verschwenkt werden kann, gerade entgegengesetzt zu der Schwenkrichtung sein, in der der zweite Schwenkarm der anderen Schwenkklammer aus seiner Ausschwenkstellung in seine Einschwenkstellung verschwenkt werden kann.

Vorzugsweise sind die zwei Schwenkklammern eines jeweiligen Paares nicht nur symmetrisch zueinander angeordnet, sondern in entsprechender Weise, d. h. bezüglich einer zur Anlagefläche zumindest im Wesentlichen senkrechten Spiegelachse oder Spiegelebene, symmetrisch zueinander ausgebildet. Die zwei Schwenkklammern können also bezüglich der Spiegelachse eine Drehsymmetrie um 180° aufweisen oder bezüglich der Spiegelebene spiegelsymmetrisch ausgebildet sein. Insbesondere können die beiden Schwenkklammern auch baugleich zueinander sein.

Wie oben bereits erwähnt, kann die Halterung die genannte Federvorrichtung umfassen, die zwischen den Hebelschenkeln der ersten Schwenkarme der zwei Schwenkklammern eines jeweiligen Paares wirksam ist.

Ergänzend oder alternativ dazu können die ersten Schwenkarme der zwei Schwenkklammern jeweils einen Mitnehmer aufweisen, wobei die Mitnehmer der zwei Schwenkarme derart zusammenwirken, insbesondere derart lose ineinandergreifen, dass bei einem Verstellen einer der beiden Schwenkklammern in den Freigabezustand oder in den Sicherungszustand die andere der beiden Schwencklammern ebenfalls in den Freigabezustand bzw. in den Sicherungszustand verstellt wird. Insbesondere können die Mitnehmer derart zusammenwirken, dass bei einem Verstellen des ersten Schwenkarms einer der beiden Schwenkklammern der erste Schwenkarm der anderen der beiden Schwenkklammern um dasselbe Maß in die entgegengesetzte Richtung verstellt wird. Die Mitnehmer können insbesondere jeweils am Hebelschenkel des ersten Schwenkarms der jeweiligen Schwenkklammer, vorzugsweise am genannten Endabschnitt des Hebelschenkels, ausgebildet sein. Die Mitnehmer können beispielsweise jeweils zumindest einen bezüglich der ersten Schwenkachse radial vorstehenden Fortsatz aufweisen, wobei der radiale Fortsatz einer der zwei Schwenkklammern den Mitnehmer der anderen der zwei Schwenkklammern bei einem Verstellen in den Freigabezustand beaufschlagt und der radiale Fortsatz der anderen der zwei Schwenkklammern den Mitnehmer der einen der zwei Schwenkklammern bei einem Verstellen in den Sicherungszustand beaufschlagt. Die gegenseitige Beaufschlagung erfolgt dabei insbesondere jeweils in Umfangsrichtung bezüglich der ersten Schwenkachse der jeweiligen Schwenkklammer. Die Fortsätze können dabei wie Finger oder wie Segmente zweier Zahnräder ineinandergreifen.

Ferner kann die Halterung (vorzugsweise für jedes Paar aus zwei Schwenkklammern jeweils) ein Mantelelement umfassen, das separat von den zwei Schwencklammern, insbesondere separat von den ersten Schwenkarmen und zweiten Schwenkarmen der zwei Schwenkklammern, ausgebildet ist und von dem die genannte zwischen den zwei Schwenkklammern des jeweiligen Paares wirksame Federvorrichtung und/oder die genannten miteinander zusammenwirkenden Mitnehmer der zwei Schwenkklammern zumindest teilweise umschlossen wird/werden. Das Mantelelement kann beispielsweise dazu dienen, die Federvorrichtung dagegen zu sichern, sich von den Schwenkklammern zu lösen, und/oder dazu, die Mitnehmer gegen ein Lösen voneinander zu sichern und somit das Zusammenwirken der Mitnehmer sicherzustellen.

Außerdem kann das Mantelelement als Auslöseabschnitt fungieren, der sich in der Ausschwenkstellung (und vorzugsweise auch in der genannten Übergangsstellung), nicht aber in der Einschwenkstellung der ersten Schwenkarme der zwei Schwenkklammern von unterhalb der Anlagefläche durch die Anlagefläche hindurch erstreckt und dadurch in Richtung von dem Grundkörper weg über die Anlagefläche hinaus vorsteht. Dadurch wird der Auslöseabschnitt im Freigabezustand beim Einsetzen des jeweiligen Zweiradzubehörs in die Halterung und Anlegen des Zweiradzubehörs an die Anlagefläche von dem Zweiradzubehör beaufschlagt, so dass die ersten Schwenkarme der zwei Schwenkklammern jeweils um die erste Schwenkachse in Richtung ihrer Einschwenkstellung verschwenkt werden. Sofern die Federvorrichtung vorgesehen ist, werden die ersten Schwenkarme außerdem ab dem Überschreiten der Übergangsstellung in die Einschwenkstellung vorgespannt und folglich von der Federvorrichtung bis in die Einschwenkstellung verschwenkt. Dadurch wird die Halterung durch das Einsetzen des Zweiradzubehörs nahezu automatisch in den Sicherungszustand verstellt.

Die genannte Aufgabe der Erfindung wird ferner gelöst durch ein Zweiradzubehör, insbesondere ein Zweiradschloss, vorzugsweise ein Gelenkstabschloss, mit einer für das Zweiradzubehör geeignet ausgebildeten erfindungsgemäßen Halterung. Die Halterung kann dabei insbesondere nach einer der vorstehend beschriebenen Ausführungsformen ausgebildet sein.

Die Erfindung wird nachfolgend lediglich beispielhaft unter Bezugnahme auf die Figuren näher erläutert.
- Fig. 1: zeigt in perspektivischer Darstellung eine Ausführungsform einer erfindungsgemäßen Halterung für ein Gelenkstabschloss, in der ein Gelenkstabschloss aufgenommen ist, im Sicherungszustand.
- Fig. 2: zeigt dieselbe Ausführungsform wiederum im Sicherungszustand, jedoch ohne das Gelenkstabschloss und aus anderem Blickwinkel.
- Fig. 3: zeigt einen Teil derselben Ausführungsform, insbesondere deren Schwenkklammern.
- Fig. 4: zeigt ein Mantelelement derselben Ausführungsform.
- Fig. 5: zeigt einen Querschnitt durch dieselbe Ausführungsform im Sicherungszustand mit in der Halterung aufgenommenem Gelenkstabschloss.
- Fig. 6: zeigt einen Querschnitt durch dieselbe Ausführungsform im Freigabezustand ohne das Gelenkstabschloss.

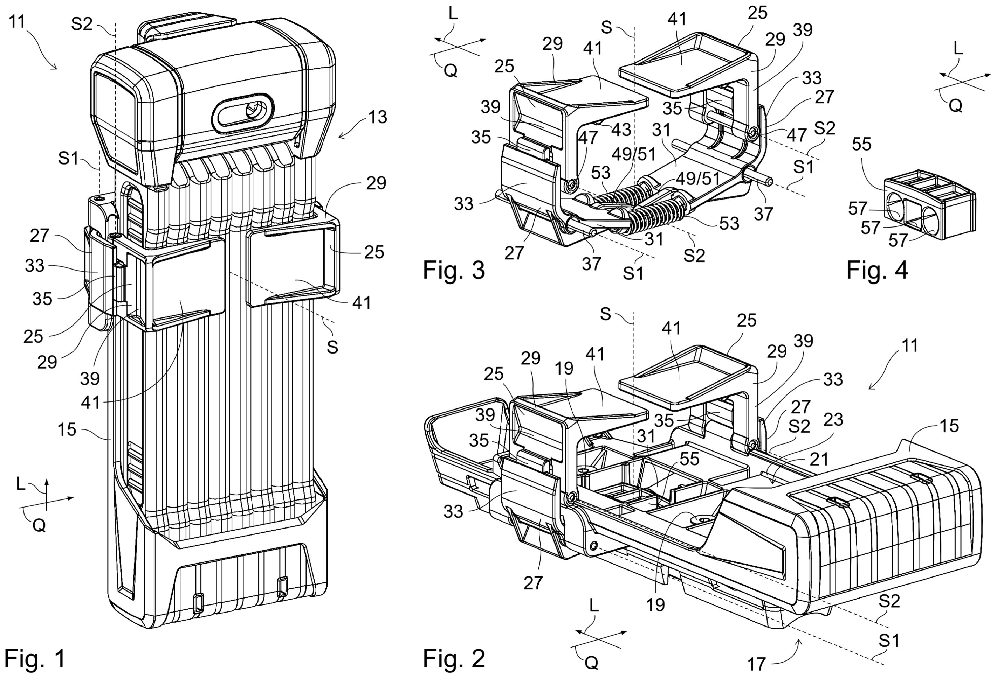

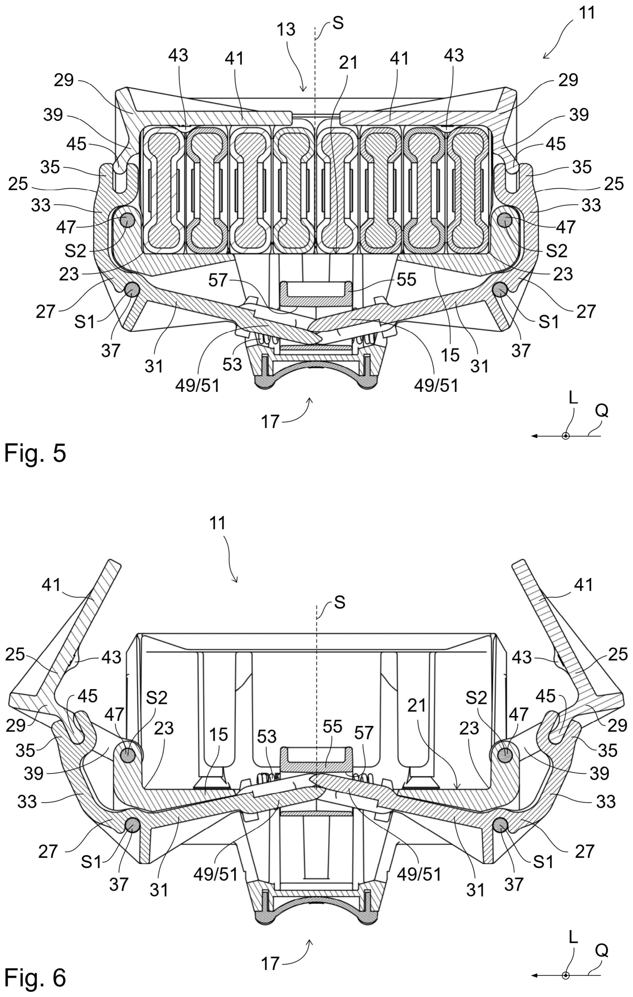

In den Figuren ist eine Halterung 11 gemäß einer beispielhaften Ausführungsform der Erfindung gezeigt. Die Halterung 11 dient dazu, ein Zweiradschloss, nämlich ein Gelenkstabschloss 13, an einem Zweirad zu halten. Zu diesem Zweck ist die Halterung 11 dazu ausgebildet, das Gelenkstabschloss 13 aufzunehmen. In den Fig. 1 und 5 ist die Halterung 11 mit darin aufgenommenem Gelenkstabschloss 13 gezeigt. Insofern zeigen die Fig. 1 und 5 auch eine Ausführungsform eines Zweiradschlosses 13, das erfindungsgemäß eine für das Zweiradschloss 13 geeignet ausgebildete Halterung 11 umfasst.

Die Halterung 11 weist einen Grundkörper 15 auf, der dazu ausgebildet ist, an einem Zweirad, insbesondere an einem Rahmenrohr des Zweirads, befestigt zu werden. Dazu ist eine Unterseite 17 des Grundkörpers 15 entsprechend gewölbt ausgebildet. Die Befestigung des Grundkörpers 15 an dem Rahmenrohr kann beispielsweise mittels Schrauben 19 erfolgen (vgl. Fig. 2), die durch den Grundkörper 15 in das Rahmenrohr oder in an dem Rahmenrohr befestigte Gewindebuchsen eingeschraubt werden.

Der Grundkörper 15 erstreckt sich in eine Längsrichtung L und weist entgegengesetzt zur Unterseite 17 eine Anlagefläche 21 auf, an der das Gelenkstabschloss 13 anliegt, wenn es in der Halterung 11 aufgenommen ist. Die Anlagefläche 21 erstreckt sich einerseits ebenfalls in die Längsrichtung L und wird andererseits bezüglich einer zur Längsrichtung L senkrechten Querrichtung Q durch zwei entgegengesetzte Längsseiten 23 begrenzt. An jeder der beiden Längsseiten 23 ist jeweils eine Schwenkklammer 25 der Halterung 11 angeordnet. Die Halterung 11 weist dadurch ein Paar aus den zwei Schwenkklammern 25 auf. Die zwei Schwenkklammern 25 sind zueinander baugleich ausgebildet und bezüglich einer zur Anlagefläche 21 senkrecht ausgerichteten Spiegelachse S, die die Anlagefläche 21 mittig zwischen den zwei Längsseiten 23 kreuzt, symmetrisch zueinander angeordnet.

Die Schwenkklammern 25 sind jeweils zweiteilig ausgebildet und umfassen jeweils einen ersten Schwenkarm 27 und einen zweiten Schwenkarm 29. Im Folgenden wird die Ausbildung der Schwenkklammern 27 anhand nur einer der beiden Schwenkklammern 27 beschrieben, wobei die Beschreibung aufgrund der Baugleichheit für beide Schwenkklammern gilt.

Der erste Schwenkarm 27 umfasst einen Hebelschenkel 31 und einen Kopplungsschenkel 33. Der Hebelschenkel 31 und der Kopplungsschenkel 33 erstrecken sich gewinkelt zueinander von einem gemeinsamen Übergangsabschnitt, an dem der Hebelschenkel 31 und der Kopplungsschenkel 33 ineinander übergehen, zu einem jeweiligen Endabschnitt. An seinem Endabschnitt weist der Kopplungsschenkel 33 einen als Kopplungsnut ausgebildeten Kopplungsabschnitt 35 auf (vgl. die Querschnittsdarstellungen der Fig. 5 und 6). Der Winkel zwischen dem Hebelschenkel 31 und dem Kopplungsschenkel 33 beträgt etwa 110° oder 115°.

Der erste Schwenkarm 27 ist um eine erste Schwenkachse S1 schwenkbar an dem Grundkörper 15 gelagert. Die Lagerung erfolgt dabei durch einen ersten Lagerstift 37, der sich durch am Grundkörper 15 ausgebildete Durchführungen sowie durch eine im genannten Übergangsabschnitt ausgebildete Durchführung durch den ersten Schwenkarm 27 erstreckt (vgl. insbesondere Fig. 3).

Der zweite Schwenkarm 29 umfasst einen Kopplungsschenkel 39 und einen Rückhalteschenkel 41. Der Kopplungsschenkel 39 und der Rückhalteschenkel 41 erstrecken sich gewinkelt zueinander von einem gemeinsamen Übergangsabschnitt, an dem der Kopplungsschenkel 39 und der Rückhalteschenkel 41 ineinander übergehen, zu einem jeweiligen Endabschnitt. Zwischen dem Übergangsabschnitt und seinem Endabschnitt weist der Kopplungsschenkel 39 einen als Kopplungssteg ausgebildeten Kopplungsabschnitt 45 auf (vgl. die Querschnittsdarstellungen der Fig. 5 und 6). Der Winkel zwischen dem Kopplungsschenkel 39 und dem Rückhalteschenkel 41 beträgt etwa 90°.

Der zweite Schwenkarm 29 ist um eine zweite Schwenkachse S2 schwenkbar an dem Grundkörper 15 gelagert. Die Lagerung erfolgt dabei durch einen zweiten Lagerstift 47, der sich durch eine am Grundkörper 15 ausgebildete Durchführung sowie durch im genannten Endabschnitt des Kopplungsschenkels 39 ausgebildete Durchführungen durch den zweiten Schwenkarm 29 erstreckt (vgl. insbesondere Fig. 3).

Die erste Schwenkachse S1 und die zweite Schwenkachse S2 sind dabei parallel zueinander sowie zur genannten Längsrichtung L ausgerichtet und im Bereich der jeweiligen Längsseite 23 angeordnet, an der die Schwenkklammer 25 angeordnet ist. Dadurch sind sowohl die erste Schwenkachse S1 als auch die zweite Schwenkachse S2 dieser Längsseite 23 näher als der dazu entgegengesetzten Längsseite 23 der Anlagefläche 21.

Die erste Schwenkachse S1 ist unterhalb einer Anlageebene angeordnet, in der die Anlagefläche 21 liegt oder durch die sich die Anlagefläche 21 zumindest annähern lässt. Dadurch kann sich der Hebelschenkel 31 des ersten Schwenkarms 27 unter die Anlagefläche 21 erstreckt, während sich der gegenüber dem Hebelschenkel 31 abgewinkelte Kopplungsschenkel 33 des ersten Schwenkarms 27 seitlich zur Anlagefläche 21 durch die genannte Anlageebene hindurch erstreckt und die Anlagefläche 21 insofern flankiert.

Die zweite Schwenkachse S2 ist dagegen oberhalb der genannten Anlageebene angeordnet, so dass die beiden Schwenkachsen S1, S2 bezüglich einer zur Anlagefläche 21 senkrechten Richtung auf unterschiedlichen Seiten der Anlagefläche 21 angeordnet sind. Dadurch kann der Kopplungsschenkel 39 des zweiten Schwenkarms 29 zumindest annähernd in Verlängerung des Kopplungsschenkels 33 des ersten Schwenkarms 27 seitlich zur Anlagefläche 21 angeordnet sein, während sich der gegenüber dem Kopplungsschenkel 39 abgewinkelte Rückhalteschenkel 41 bis über die Anlagefläche 21 erstrecken kann. Auf diese Weise kann der Rückhalteschenkel 41 je nach seiner Schwenkstellung an dem Gelenkstabschloss 13 anliegen, um es in der Halterung 11 zu sichern. Der Rückhalteschenkel 41 weist zudem einen länglichen Stegabschnitt 43 auf (vgl. insbesondere Fig. 6), der von dem Rückhalteschenkel 41 in Richtung zur Anlagefläche 21 vorsteht, um für eine noch verbesserte Sicherung des Gelenkstabschlosses 13 in einen kerbenartigen Bereich zwischen zwei aufeinanderfolgenden Gelenkstäben des in die Halterung 11 aufgenommenen Gelenkstabschlosses 13 einzugreifen.

Aufgrund der schwenkbaren Lagerung um die jeweilige Schwenkachse S1, S2 können der erste Schwenkarm 27 und der zweite Schwenkarm 29 einerseits die in den Fig. 1 bis 3 und 5 gezeigte Einschwenkstellung und andererseits die in Fig. 6 gezeigte Ausschwenkstellung einnehmen und zwischen diesen Stellungen verschwenkt werden. Dabei greift in allen Schwenkstellungen zwischen der Einschwenkstellung und der Ausschwenkstellung (einschließlich dieser beiden Stellungen) der als Kopplungssteg ausgebildete Kopplungsabschnitt 45 des zweiten Schwenkarms 29 in den als Kopplungsnut ausgebildeten Kopplungsabschnitt 35 des ersten Schwenkarms 27 - je nach Schwenkstellung unterschiedlich tief - ein (vgl. die Querschnittsdarstellungen der Fig. 5 und 6).

Dies führt zu einer Kopplung des ersten Schwenkarms 27 und des zweiten Schwenkarms 29 miteinander, die derart ist, dass bei einem Verschwenken des ersten Schwenkarms 27 oder des zweiten Schwenkarms 29 in die Einschwenkstellung oder in die Ausschwenkstellung der jeweilige andere Schwenkarm 27 bzw. 29 in seine entsprechende Schwenkstellung verschwenkt wird. Wird einer der beiden Schwenkarme 27, 29 in seine Einschwenkstellung verschwenkt, wird also auch der andere in seine Einschwenkstellung verschwenkt; und wird einer der beiden Schwenkarme 27, 29 in seine Ausschwenkstellung verschwenkt, wird auch der andere in seine Ausschwenkstellung verschwenkt.

Wenn sich, wie in Fig. 1 bis 3 und 5 gezeigt, der erste Schwenkarm 27 und der zweite Schwenkarm 29 in ihrer jeweiligen Einschwenkstellung befinden, entspricht das einem Sicherungszustand, in dem das in die Halterung 11 aufgenommene Gelenkstabschloss 13 durch die Schwenkklammern 25 gegen ein Entnehmen aus der Halterung 11 gesperrt ist; wenn sich dagegen, wie in Fig. 6 gezeigt, der erste Schwenkarm 27 und der zweite Schwenkarm 29 in ihrer jeweiligen Ausschwenkstellung befinden, entspricht das einem Freigabezustand, in dem ein Aufnehmen des Gelenkstabschlosses 13 in die Halterung 11 sowie eine Entnehmen des Gelenkstabschlosses 13 aus der Halterung 11 möglich ist. Aufgrund der genannten Kopplung ihrer beiden Schwenkarme 27, 29 kann die Schwenkklammer 25 auf einfache Weise zwischen dem Freigabezustand und dem Sicherungszustand verstellt werden.

Der Schwenkwinkel, um den sich die Einschwenkstellung und die Ausschwenkstellung des ersten Schwenkarms 27 voneinander unterscheiden, ist - infolge der beschriebenen Lage der Schwenkachsen S1, S2 und ihrer Anordnung an den Schwenkarmen 27, 29 sowie der Anordnung der Kopplungsabschnitte 35, 45 an den Schwenkarmen 27, 29 - kleiner als der Schwenkwinkel, um den sich die Einschwenkstellung und die Ausschwenkstellung des zweiten Schwenkarms 29 voneinander unterscheiden. Bei der gezeigten Ausführungsform beträgt der Schwenkwinkel des ersten Schwenkarms 27 etwa 45°, während der Schwenkwinkel des zweiten Schwenkarms 29 etwa 60° beträgt. Auf diese Weise kann der erste Schwenkarm 27 beschränkt durch den unterhalb der Anlagefläche 21 für den Hebelschenkel 31 zur Verfügung stehenden Raum um einen vergleichsweise kleinen Winkel verschwenkt werden, während der zweite Schwenkarm 29 infolge der Kopplung mit dem ersten Schwenkarm 27 gleichzeitig um einen vergleichsweise großen Winkel verschwenkt wird. Das ermöglicht es, dass der Rückhalteschenkel 41 vergleichsweise lang ausgebildet sein kann, damit er in seiner Einschwenkstellung (Sicherungszustand) das aufgrund seiner acht Gelenkstäbe vergleichsweise breite Gelenkstabschloss 13 zuverlässig in der Halterung 11 sichern kann, und dennoch in seiner Ausschwenkstellung (Freigabezustand) so weit ausgeschwenkt sein kann, dass der den Raum über der Anlagefläche 21 seitlich verlässt und dadurch das Einsetzen bzw. Entnehmen des Gelenkstabschlosses 13 ermöglicht.

Nicht nur die zwei Schwenkarme 27, 29 einer jeweiligen Schwenkklammer 25 sind miteinander gekoppelt, sondern auch die beiden Schwenkklammern 25 des genannten Paares sind miteinander gekoppelt. Dazu ist am genannten Endabschnitt des Hebelschenkels 31 der ersten Schwenkarms 27 ein Mitnehmer 49 ausgebildet, der jeweils zumindest einen bezüglich der ersten Schwenkachse S1 radialen Fortsatz 51 aufweist. Die Hebelschenkel 31 der ersten Schwenkarme 27 der zwei Schwenkklammern 25 erstrecken sich dabei unterhalb der Anlagefläche 21 so weit aufeinander zu, dass der zumindest eine an der einen Schwenkklammer 25 ausgebildete radiale Fortsatz 51 und der zumindest eine an der anderen Schwencklammer 25 ausgebildete radiale Fortsatz 51 derart lose ineinandergreifen, dass bei einem Verstellen einer der beiden Schwenkklammern 25 in den Freigabezustand oder in den Sicherungszustand die andere der beiden Schwenkklammern 25 ebenfalls in den Freigabezustand bzw. den Sicherungszustand verstellt wird.

Die Halterung umfasst außerdem eine Federvorrichtung 53, die zwei Druckfedern in Form zweier Schraubenfedern umfasst und die genannten Endabschnitte der Hebelschenkel 31 der ersten Schwenkarme 27 der zwei Schwenkklammern 25 beaufschlagt und dadurch voneinander wegdrückt (vgl. insbesondere Fig. 3). Den geringsten Abstand, bei dem die Schraubenfedern am stärksten komprimiert sind und daher die größer Federkraft ausüben, weisen diese Endabschnitte dabei in einer nicht gezeigten Übergangsstellung der ersten Schwenkarme 27 auf, in der die Endabschnitte und die ersten Schwenkachsen S1 auf einer Linie angeordnet sind. Auf der einen Seite dieser Übergangsstellung werden von der Federvorrichtung 53 somit die ersten Schwenkarme 27 in ihre Ausschwenkstellung, infolge der Kopplung über die Kopplungsabschnitte 35, 45 die zweiten Schwenkarme 29 ebenfalls in ihre Ausschwenkstellung und die Schwenkklammern 25 insgesamt in den Freigabezustand vorgespannt; auf der anderen Seite der Übergangsstellung werden von der Federvorrichtung 53 dagegen die ersten Schwenkarme 27 in ihre Einschwenkstellung, infolge der Kopplung über die Kopplungsabschnitte 35, 45 die zweiten Schwenkarme 29 ebenfalls in ihre Einschwenkstellung und die Schwencklammern 25 insgesamt in den Sicherungszustand vorgespannt.

Ferner umfasst die Halterung 11 für das genannte Paar aus zwei Schwenkklammern 25 ein Mantelelement 55, das in Fig. 4 gesondert gezeigt ist. Das Mantelelement 55 ist separat von den zwei Schwenkklammern 25 ausgebildet, quaderförmig und dazu vorgesehen, die genannten Mitnehmer 49 mit ihren radialen Fortsätzen 51 sowie die Federvorrichtung 53 zumindest teilweise zu umschließen. Dazu weist das Mantelelement 55 drei Durchgänge 57 auf, die sich entlang der genannten Querrichtung Q durch das Mantelelement 55 erstrecken und entlang der genannten Längsrichtung L benachbart zueinander angeordnet sind. In den mittleren dieser Durchgänge 57 erstrecken sich von beiden Seiten aus die radialen Fortsätze 51 der Mitnehmer 49 der beiden Schwenkklammern 25, so dass sie innerhalb des Mantelelements 55 zusammenwirken; durch die beiden äußeren Durchgänge 57 hindurch erstreckt sich jeweils eine der Druckfedern der Federvorrichtung 53. Auf diese Weise kann das Mantelelement 55 ein zuverlässiges Zusammenwirken der Mitnehmer 49 sicherstellen und die Federn der Federvorrichtung 53 dagegen sichern, sich von den Schwenkklammern 25 zu lösen.

Außerdem fungiert das Mantelelement 55 als Auslöseabschnitt, der sich in der Ausschwenkstellung (und vorzugsweise auch in der genannten Übergangsstellung), nicht aber in der Einschwenkstellung der ersten Schwenkarme 27 der zwei Schwenkklammern 25 von unterhalb der Anlagefläche 21 durch die Anlagefläche 21 hindurch erstreckt und dadurch in Richtung von dem Grundkörper 15 weg über die Anlagefläche 21 hinaus vorsteht (vgl. Fig. 6). Dadurch wird das Mantelelement 55 im Freigabezustand beim Einsetzen des Gelenkstabschlosses 13 in die Halterung 11 durch das Anlegen des Gelenkstabschlosses 13 an die Anlagefläche 21 beaufschlagt, so dass die ersten Schwenkarme 27 der zwei Schwenkklammern 25 jeweils um die erste Schwenkachse S1 in Richtung der Einschwenkstellung verschwenkt werden. Ab dem Überschreiten der Übergangsstellung werden die ersten Schwenkarme 27 dann außerdem von der Federvorrichtung 53 bis in die Einschwenkstellung verschwenkt. Dadurch wird die Halterung 11 durch das Einsetzen des Gelenkstabschlosses 13 nahezu automatisch in den Sicherungszustand verstellt.

Insgesamt lässt sich die Halterung 11 somit komfortabel bedienen. Dabei ist die Halterung 11 auch für vergleichsweise breite Gelenkstabschlösser 13 (oder anderes vergleichsweise breites Zweiradzubehör) geeignet, ohne dass das zu einer Beeinträchtigung der einfachen Bedienbarkeit oder der Zuverlässigkeit führen würde. Erreicht wird die Eignung für vergleichsweise breites Zweiradzubehör dabei insbesondere durch die zweiteilige Ausbildung der Schwenkklammern 25 mit zwei verschiedenen, aber an derselben Längsseite 23 der Anlagefläche 21 angeordneten Schwenkachsen S1, S2.

### Bezugszeichen

- 11: Halterung
- 13: Zweiradzubehör in Form eines Gelenkstabschlosses
- 15: Grundkörper
- 17: Unterseite des Grundkörpers
- 19: Schraube
- 21: Anlagefläche
- 23: Längsseite der Anlagefläche
- 25: Schwenkklammer
- 27: erster Schwenkarm
- 29: zweiter Schwenkarm
- 31: Hebelschenkel des ersten Schwenkarms
- 33: Kopplungsschenkel des ersten Schwenkarms
- 35: als Kopplungsnut ausgebildete Kopplungsabschnitt
- 37: erster Lagerstift
- 39: Kopplungsschenkel des zweiten Schwenkarms
- 41: Rückhalteschenkel des zweiten Schwenkarms
- 43: Stegabschnitt
- 45: als Kopplungssteg ausgebildeter Kopplungsabschnitt
- 47: zweiter Lagerstift
- 49: Mitnehmer
- 51: radialer Fortsatz
- 53: Federvorrichtung
- 55: Mantelelement
- 57: Durchgang
- L: Längsrichtung
- Q: Querrichtung
- S: Spiegelachse
- S1: erste Schwenkachse
- S2: zweite Schwenkachse

## Patentansprüche

1. Halterung (11) für ein Zweiradzubehör (13), insbesondere für ein Zweiradschloss, umfassend
- einen Grundkörper (15), durch den eine Anlagefläche (21) definiert wird, die bezüglich einer Querrichtung (Q) durch zwei entgegengesetzte Längsseiten (23) begrenzt wird und an der das Zweiradzubehör (13) anliegt, wenn es in der Halterung (11) aufgenommen ist, sowie
- eine oder mehrere Schwenkklammern (25), die jeweils an einer der beiden Längsseiten (23) angeordnet sind und zwischen einem Freigabezustand und einem Sicherungszustand verstellbar sind, um im Freigabezustand ein Aufnehmen des Zweiradzubehörs (13) in die Halterung (11) oder ein Entnehmen des Zweiradzubehörs (13) aus der Halterung (11) zu ermöglichen und im Sicherungszustand das Zweiradzubehör, wenn es in der Halterung (11) aufgenommen ist, gegen ein Entnehmen aus der Halterung (11) zu sperren,
**dadurch gekennzeichnet,**
**dass** die Schwenkklammern (25) jeweils zumindest zweiteilig ausgebildet sind und einen ersten Schwenkarm (27) umfassen, der um eine erste Schwenkachse (S1) schwenkbar an dem Grundkörper (15) gelagert ist und im Freigabezustand eine Ausschwenkstellung sowie im Sicherungszustand eine Einschwenkstellung einnimmt, sowie einen zweiten Schwenkarm (29) umfassen, der um eine zweite Schwenkachse (S2) schwenkbar an dem Grundkörper (15) gelagert ist und im Freigabezustand eine Ausschwenkstellung sowie im Sicherungszustand eine Einschwenkstellung einnimmt, wobei die erste Schwenkachse (S1) und die zweite Schwenkachse (S2) näher an derselben der beiden Längsseiten (23) der Anlagefläche (21) angeordnet sind als an der anderen.

2. Halterung nach Anspruch 1,
wobei die erste Schwenkachse (S1) und die zweite Schwenkachse (S2) parallel zueinander sind.

3. Halterung nach Anspruch 1 oder 2,
wobei die erste Schwenkachse (S1) und die zweite Schwenkachse (S2) bezüglich einer zur Anlagefläche (21) senkrechten Richtung auf unterschiedlichen Seiten der Anlagefläche (21) angeordnet sind.

4. Halterung nach einem der vorstehenden Ansprüche,
wobei der erste Schwenkarm (27) und der zweite Schwenkarm (29) derart miteinander gekoppelt sind, dass bei einem Verschwenken des ersten Schwenkarms (27) in dessen Einschwenkstellung der zweite Schwenkarm (29) in seine Einschwenkstellung verschwenkt wird und bei einem Verschwenken des zweiten Schwenkarms (29) in dessen Ausschwenkstellung der erste Schwenkarm (27) in seine Ausschwenkstellung verschwenkt wird.

5. Halterung nach Anspruch 4,
wobei der erste Schwenkarm (27) und der zweite Schwenkarm (29) derart miteinander gekoppelt sind, dass bei einem Verschwenken des ersten Schwenkarms (27) in dessen Ausschwenkstellung der zweite Schwenkarm (29) in seine Ausschwenkstellung verschwenkt wird und/oder bei einem Verschwenken des zweiten Schwenkarms (29) in dessen Einschwenkstellung der erste Schwenkarm (27) in seine Einschwenkstellung verschwenkt wird.

6. Halterung nach einem der vorstehenden Ansprüche,
wobei sich die Einschwenkstellung und die Ausschwenkstellung des ersten Schwenkarms (27) um einen ersten Schwenkwinkel unterscheiden, der kleiner als ein zweiter Schwenkwinkel ist, um den sich die Einschwenkstellung und die Ausschwenkstellung des zweiten Schwenkarms (29) unterscheiden.

7. Halterung nach Anspruch 6,
wobei der erste Schwenkwinkel höchstens 45° beträgt, vorzugsweise im abgeschlossenen Intervall von 15° bis 35° liegt, insbesondere etwa 25° beträgt, und/oder der zweite Schwenkwinkel mehr als 45° beträgt, vorzugsweise im abgeschlossenen Intervall von 50° bis 70° liegt, insbesondere etwa 60° beträgt.

8. Halterung nach einem der vorstehenden Ansprüche,
wobei der erste Schwenkarm (27) einen Hebelschenkel (31) und einen Kopplungsschenkel (33) aufweist, die sich jeweils von einem gemeinsamen Übergangsabschnitt, an dem sie ineinander übergehen, zu einem jeweiligen Endabschnitt erstrecken,
wobei die erste Schwenkachse (S1) durch den gemeinsamen Übergangsabschnitt verläuft,
und wobei der Kopplungsschenkel (33) einen Kopplungsabschnitt (35) aufweist, über den der erste Schwenkarm (27) mit dem zweiten Schwenkarm (29) gekoppelt ist.

9. Halterung nach Anspruch 8,
wobei der Kopplungsabschnitt (35) des ersten Schwenkarms (27) am Endabschnitt des Kopplungsschenkels (33) des ersten Schwenkarms (27) angeordnet ist.

10. Halterung nach einem der vorstehenden Ansprüche,
wobei der zweite Schwenkarm (29) einen Kopplungsschenkel (39) und einen Rückhalteschenkel (41) aufweist, die sich jeweils von einem gemeinsamen Übergangsabschnitt, an dem sie ineinander übergehen, zu einem jeweiligen Endabschnitt erstrecken,
wobei die zweite Schwenkachse (S2) durch den Endabschnitt des Kopplungsschenkels (39) verläuft,
und wobei der Kopplungsschenkel (39) einen Kopplungsabschnitt (45) aufweist, über den der zweite Schwenkarm (29) mit dem ersten Schwenkarm (27) gekoppelt ist.

11. Halterung nach Anspruch 10,
wobei der Kopplungsabschnitt (45) des zweiten Schwenkarms (29) zwischen der zweiten Schwenkachse (S1) und dem gemeinsamen Übergangsabschnitt des Kopplungsschenkels (39) des zweiten Schwenkarms (29) angeordnet ist.

12. Halterung nach Anspruch 10 oder 11,
wobei der Rückhalteschenkel (41) einen länglichen Stegabschnitt (43) aufweist, der vom übrigen Rückhalteschenkel (41) in Richtung zur Anlagefläche (21) vorsteht, um in das Zweiradzubehör (13) einzugreifen.

13. Halterung nach Anspruch 8 oder 9 und nach einem der Ansprüche 10 bis 12,
wobei der Kopplungsabschnitt (35, 45) eines der beiden Schwenkarme (25) als Kopplungsnut (35) ausgebildet ist und der Kopplungsabschnitt (35, 45) des anderen der beiden Schwenkarme (25) als Kopplungssteg (45) ausgebildet ist, wobei der Kopplungssteg (45) für die genannte Kopplung in die Kopplungsnut (35) eingreift.

14. Halterung nach einem der vorstehenden Ansprüche,
die zumindest ein Paar aus zwei Schwenkklammern (25) aufweist, die jeweils in der genannten Weise ausgebildet sind,
wobei die zwei Schwenkklammern (25) bezüglich einer zur Anlagefläche (21) zumindest im Wesentlichen senkrechten Spiegelachse (S) oder Spiegelebene symmetrisch zueinander angeordnet sind.

15. Zweiradzubehör (13), insbesondere Zweiradschloss, mit einer für das Zweiradzubehör (13) geeignet ausgebildeten Halterung (11) nach einem der vorstehenden Ansprüche.
